# FASCICULE DE BREVET EUROPEEN

(11) **EP 2 435 696 B1**
(45) Date de publication et mention de la délivrance du brevet: **04.09.2013**
(21) Numéro de dépôt: 10723561.6
(22) Date de dépôt: 21.05.2010
(51) Int. Cl.: F03D 1/06

(54) **EOLIENNE**
WINDTURBINE
WIND TURBINE

(30) Priorité: 26.05.2009 FR 0953464
(43) Date de publication de la demande: 04.04.2012
(73) Titulaire: Etablissements Roty et Fils, 35430 La Ville Es Nonais (FR)
(72) Inventeur: ROTY, Loïc, F-35540 Miniac Morvan (FR)
(74) Mandataire: Maillet, Alain
(86) Numéro de dépôt international: PCT/EP2010/057061
(87) Numéro de publication internationale: WO 2010/145916

(56) Documents cités:
- EP-A1- 1 365 106
- EP-A1- 2 028 102
- DE-A1- 3 331 166
- GB-A- 1 598 690
- SU-A1- 1 195 041

## Description

La présente invention se rapporte à une éolienne d'une construction économique.

Pour construire une éolienne susceptible d'exploiter la force motrice du vent, on utilise de manière connue des pales qui sont assemblées autour d'un moyeu d'axe horizontal qui est supporté à rotation autour d'un mât d'axe vertical ancré dans le sol ou en mer.

La fabrication des pales représente bien souvent un travail long et coûteux, puisqu'elles sont généralement fabriquées dans un moule. Les étapes de fabrication sont longues et le moule de fabrication est relativement onéreux.

Le but de l'invention est donc de proposer, notamment, une éolienne d'une construction économique.

Une éolienne représentant l'art antérieur est décrite dans le document EP 1 365 106 A1.

Les caractéristiques de l'invention mentionnées ci-dessous, ainsi que d'autres, apparaîtront plus clairement à la lecture de la description suivante d'un exemple de réalisation, ladite description étant faite en relation avec les dessins joints, parmi lesquels :
la Fig. 1 représente une vue de face d'une éolienne selon l'invention,
la Fig. 2 représente une vue de face montrant la fixation des pales sur le moyeu d'une éolienne selon l'invention,
la Fig. 3a représente une vue en coupe d'une membrure destinée à la fabrication d'une pale pour une éolienne selon l'invention,
la Fig. 3b représente une vue en coupe d'un profilé destiné à la fabrication d'une membrure de pale pour une éolienne selon l'invention,
la Fig. 3c représente une vue en coupe d'une première variante de réalisation d'un profilé destiné à la fabrication d'une membrure de pale pour une éolienne selon l'invention,
la Fig. 3d représente une vue en coupe d'une seconde variante de réalisation d'un profilé destiné à la fabrication d'une membrure de pale pour une éolienne selon l'invention,
la Fig. 4a représente une vue de face d'une membrure destinée à la fabrication de pales pour une éolienne selon l'invention,
la Fig. 4b représente une vue de face d'une première variante de réalisation d'une membrure destinée à la fabrication de pales pour une éolienne selon l'invention,
la Fig. 4c représente une vue de face d'une seconde variante de réalisation d'une membrure destinée à la fabrication de pales pour une éolienne selon l'invention,
la Fig. 4d représente une vue de face d'une troisième variante de réalisation d'une membrure destinée à la fabrication de pales pour une éolienne selon l'invention.
la Fig. 4e représente une vue en perspective d'une membrure comprenant deux éléments réunis par une bride de liaison, destinée à la fabrication de pales pour une éolienne selon l'invention,
la Fig. 5 représente une vue de face d'une éolienne dont les membrures sont en cours d'assemblage autour de son moyeu selon l'invention,
la Fig. 6 représente une vue de face d'une éolienne comportant cinq pales selon l'invention,
la Fig. 7 représente une vue de face d'une éolienne dont les extrémités des pales présentent une structure particulière selon l'invention,
la Fig. 8a représente une vue en perspective d'une éolienne montrant un mécanisme de réglage du pas moyen de ses pales selon l'invention et,
la Fig. 8b représente une vue en perspective d'une éolienne montrée sur la Fig. 8a et dont les pales sont orientées différemment selon l'invention.

A cet effet, est proposée une éolienne comprenant des pales solidaires d'un moyeu de transmission de couple ; selon l'invention, chaque pale est constituée d'une première membrure, d'une seconde membrure solidaires autour du moyeu, au niveau de leur milieu, et en étant réunies au niveau d'une extrémité pour former ladite pale, l'autre extrémité de chaque membrure formant une moitié d'une autre pale.

En solidarisant sensiblement en leur milieu les membrures autour du moyeu et en les cambrant pour réunir deux par deux les extrémités desdites membrures, on obtient le capteur d'énergie de l'éolienne.

Cette structure simple, et facile à assembler, procure un avantage économique à l'éolienne de l'invention.

Par ailleurs, chaque membrure participe à la construction de deux pales, ce qui accroît la rigidité du capteur d'énergie de l'éolienne.

Selon une caractéristique additionnelle de l'invention, chaque membrure présente une section rectangulaire.

Peu coûteuse à fabriquer, elle peut être découpée dans une plaque d'un matériau ou provenir d'un profilé coupé à longueur.

Selon une caractéristique additionnelle de l'invention, chaque membrure est constituée d'au moins un profilé.

Le profilé peut être fabriqué de manière industrielle et à bas coût, par extrusion, par laminage.

Selon une caractéristique additionnelle de l'invention, au moins l'un des deux bords latéraux de la membrure est recouvert par un rebord, profilé, pour limiter la traînée en fonctionnement.

On améliore ainsi le rendement de l'éolienne.

Selon une caractéristique additionnelle de l'invention, une coiffe recouvre sur sa longueur utile la membrure sur une face principale et sur ses deux bords latéraux pour lui conférer une section en profil d'aile d'avion apte à améliorer son rendement.

Selon une caractéristique additionnelle de l'invention, chaque membrure est fixée au niveau de son milieu sur le moyeu par l'intermédiaire d'une bride.

La bride facilite l'assemblage des membrures sur le moyeu.

Selon une caractéristique additionnelle de l'invention, chaque bride comprend une plaque de positionnement présentant une section en U, une entretoise apte à prendre place dans ladite plaque pour pincer une membrure, un moyen de bridage pouvant serrer ladite membrure entre ces deux composants et les brider sur le moyeu.

Selon une caractéristique additionnelle de l'invention, chaque membrure est constituée de deux éléments assemblés sur une bride de liaison solidarisée sur le moyeu.

Le transport de l'éolienne est rendu plus facile en transportant la membrure démontée.

Selon une caractéristique additionnelle de l'invention, chaque bride de liaison se compose d'un pivot comportant un axe permettant l'assemblage de ladite bride sur le moyeu, le pivot étant prolongé latéralement par deux ailes de réception des deux éléments, les deux ailes étant décalées angulairement et de manière symétrique de part et d'autre de l'axe du pivot pour définir le pas de départ des deux éléments de la membrure.

Selon une caractéristique additionnelle de l'invention, la première membrure et la seconde membrure sont réunies par l'intermédiaire d'un moyen d'assemblage traversant des trous prévus dans lesdites membrures pour former l'extrémité de ladite pale.

Un simple rivet, boulon, suffit pour réunir les extrémités des deux membrures.

Selon une caractéristique additionnelle de l'invention, des orifices traversent la première membrure et la seconde membrure à proximité des trous pour recevoir un moyen de blocage pour positionner angulairement les deux membrures afin de régler le pas moyen de la pale correspondante.

Le calage des membrures est réalisé avec précision pour toutes les pales.

Selon une caractéristique additionnelle de l'invention, au moins une échancrure est réalisée sur le bord latéral de chaque membrure au niveau de sa partie centrale permettant de décaler latéralement deux membrures au niveau de leur croisement afin de les obliger à se déformer dans une géométrie voulue.

Le calage des membrures est réalisé également avec précision pour toutes les pales.

Selon une caractéristique additionnelle de l'invention, chaque membrure est constituée de deux branches parallèles décalées latéralement en étant réunies par une branche intermédiaire, permettant de décaler latéralement deux membrures au niveau de leur croisement afin de les obliger à se déformer dans une géométrie voulue.

On peut définir, là encore, le calage des membrures pour toutes les pales.

Selon une caractéristique additionnelle de l'invention, la largeur de la membrure augmente avec l'éloignement de ses extrémités pour renforcer sa structure et accroître sa surface exposée au vent.

Selon une caractéristique additionnelle de l'invention, elle incorpore un mécanisme de réglage du pas moyen des pales. Ce mécanisme permet d'optimiser le rendement de l'éolienne, d'accroître sa sécurité de fonctionnement en limitant la vitesse de rotation des pales.

Selon une caractéristique additionnelle de l'invention, le mécanisme de réglage comprend un entraîneur mobile suivant la direction axiale du moyeu, un doigt ancré sur chacune des faces latérales de l'entraîneur et autour duquel peut osciller une glissière et dans laquelle est fixée l'extrémité libre d'un axe tenu dans la plaque de positionnement d'une bride correspondante pour la décaler angulairement.

Le déplacement de l'entraîneur modifie la position angulaire des brides et par conséquent vrille les membrures, ce qui modifie leur pas moyen.

Selon une caractéristique additionnelle de l'invention, l'entraîneur est logé dans une paroi cylindrique constitutive du moyeu, l'entraîneur étant traversé par un taraudage dans lequel est vissée une vis tenue axialement dans le moyeu et qui est montée libre à rotation, procurant à l'entraîneur la faculté de coulisser suivant la direction de l'axe du moyeu, lorsque l'on visse ou dévisse ladite vis.

Selon une caractéristique additionnelle de l'invention, un entraînement motorisé est accouplé à la vis pour pouvoir commander le réglage des pales pendant le fonctionnement de l'éolienne.

Un procédé de fabrication d'une éolienne du type comprenant des pales destinées à être solidarisées à un moyeu est également couvert.

Selon l'invention, le procédé consiste à utiliser des membrures souples ou pré-cambrées, à les solidariser au niveau de leur milieu autour du moyeu, à réunir deux par deux leurs extrémités libres de manière à fabriquer les pales.

Les membrures sont avantageusement fabriquées par un procédé industriel peu onéreux en grande série, par exemple par extrusion ou laminage, par découpage dans une plaque d'un matériau.

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels:

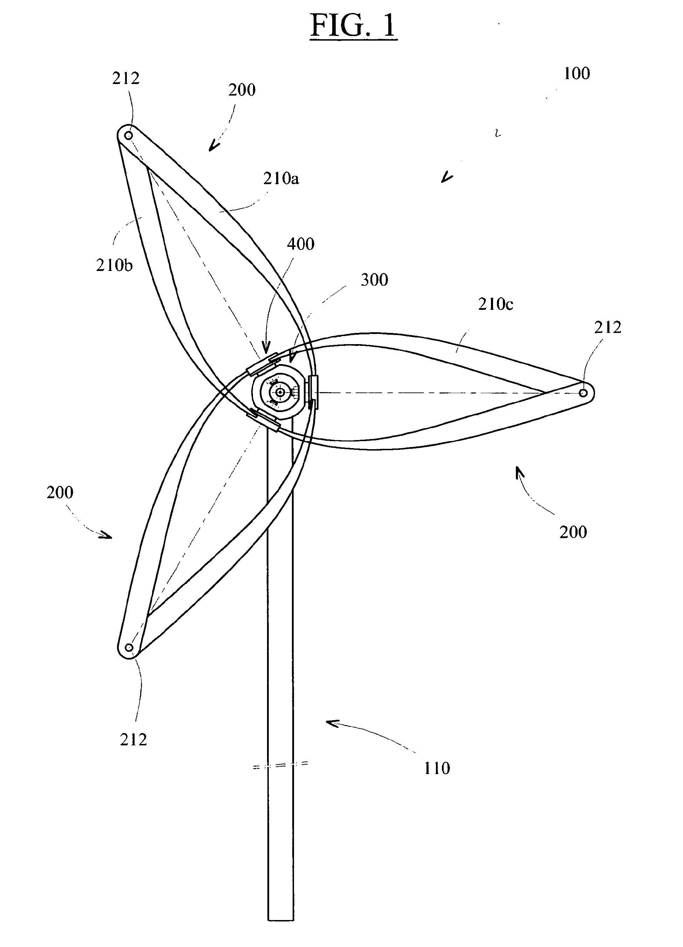

L'éolienne 100 présentée sur la Fig. 1 est destinée à être exposée à un vent relatif pour entraîner un générateur, une pompe et de manière générale, tout moyen récepteur susceptible d'utiliser le couple moteur qu'elle est capable de produire. Ce moyen récepteur n'est pas représenté.

L'éolienne 100 comporte plusieurs pales 200 solidaires autour d'un moyeu 300 d'axe horizontal et qui sont réparties régulièrement autour de celui-ci. Ce moyeu est tenu libre à rotation dans un palier qui est supporté à rotation autour d'un mât 110 d'axe vertical ancré dans le sol. Le moyeu 300 est alors susceptible de transmettre directement ou indirectement par l'intermédiaire d'une transmission, un couple moteur au moyen récepteur.

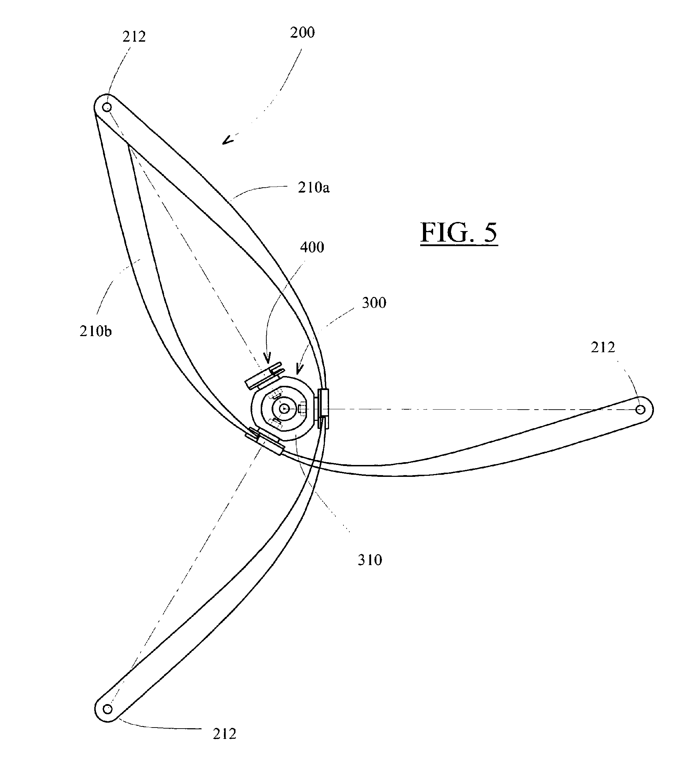

Chaque pale 200 présente la caractéristique d'être constituée de deux moitiés de membrures 210a et 210b, comme cela apparaît sur cette Fig. 1 et plus distinctement encore sur la Fig. 5. Chaque membrure 210 est solidarisée en son milieu autour du moyeu 300. L'extrémité d'une pale 200 est formée par la réunification d'une extrémité libre d'une première membrure 210a avec une extrémité libre d'une seconde membrure 210b. L'autre extrémité de chaque membrure est destinée à former la moitié d'une autre pale.

Chaque membrure est ainsi associée d'une part, au moyeu et, d'autre part, à une autre membrure pour construire une structure de pale. Chaque membrure présente également une structure souple permettant de la cambrer pour solidariser chacune de ses extrémités avec une extrémité d'une autre membrure.

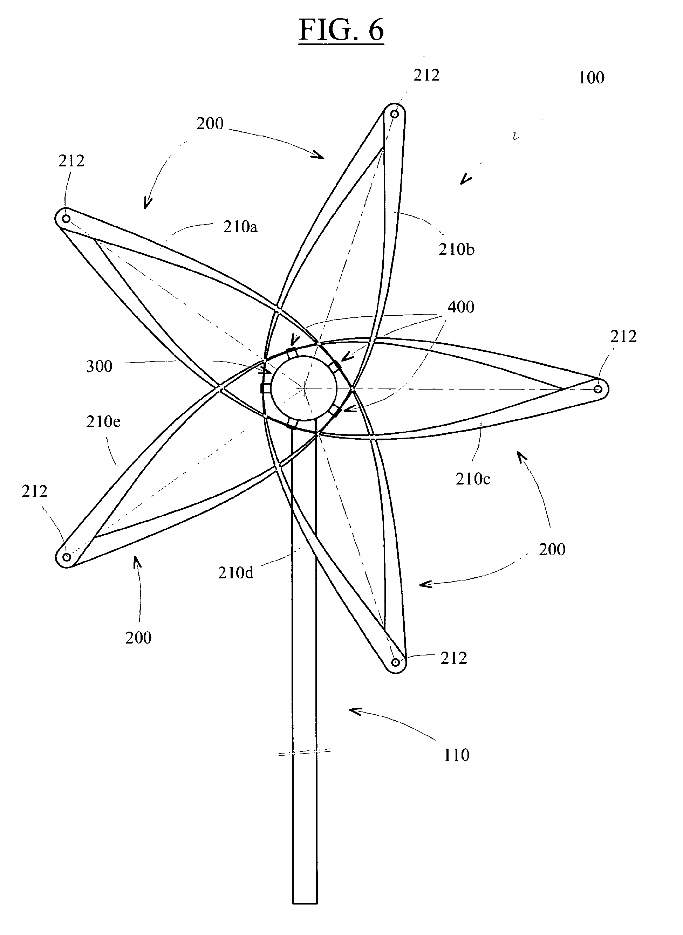

Sur la Fig. 1, l'éolienne 100 comporte trois pales 200. Dans une variante de réalisation représentée sur la Fig. 6, l'éolienne 100 comporte cinq pales 200. De manière générale, un nombre impair de pales, supérieur ou égal à trois, est préféré pour obtenir une meilleure rigidité qu'un nombre pair de pales. Par ailleurs, on remarquera que l'éolienne comporte autant de pales que de membrures.

On remarquera que le nombre de pales peut être différent selon que l'on veut obtenir du couple ou de la puissance. Avec un nombre de pales élevé, on obtient une éolienne qui fournit de la puissance avec un vent relativement faible alors qu'une éolienne pourvue d'un nombre de pales relativement faible, on obtient une éolienne puissante par vent fort.

Pour construire une membrure, une solution simple et peu onéreuse a été mise en oeuvre. Elle consiste à couper à une longueur définie un profilé fabriqué dans un matériau relativement souple. Le profilé peut être fabriqué en métal, tel qu'un alliage d'aluminium, un acier inoxydable, ou fabriqué en matière plastique comme le polyéthylène, le polycarbonate ou encore fabriqué en une résine chargée de fibres telles que des fibres de carbone. Le profilé peut être fabriqué par extrusion, par laminage. On peut encore découper une bande dans une feuille de matière pour fabriquer la membrure.

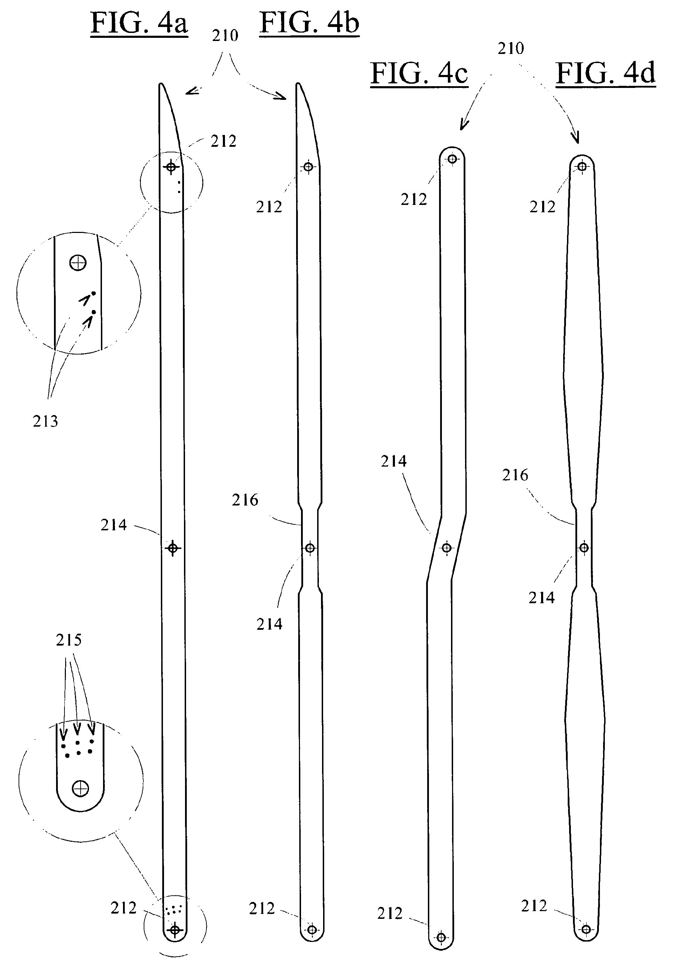

Sur les Fig. 4a et 4b, les extrémités de la membrure 210 sont ensuite arrondies ou biseautées pour lui donner sa géométrie finale. Des trous 212 sont percés au niveau des extrémités pour réunir mutuellement deux membrures et un autre trou 214 est percé au niveau de sa partie centrale pour permettre la solidarisation de la membrure sur le moyeu.

Une éolienne 100 pourvue de membrures arrondies à ses deux extrémités est présentée sur la Fig. 1.

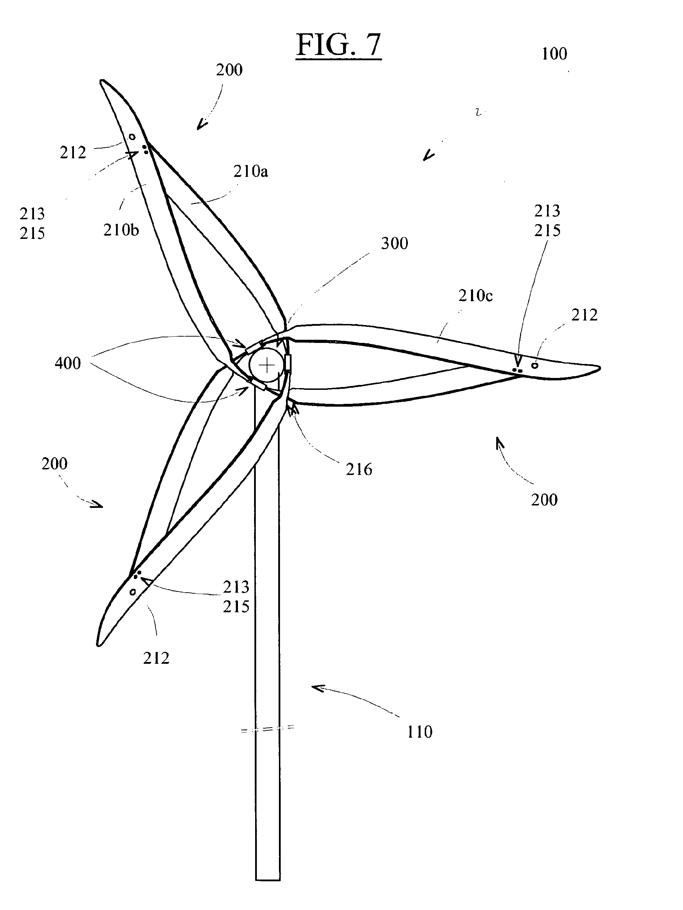

Une éolienne 100 pourvue de membrures 210 plus longues d'un côté que de l'autre est présentée sur la Fig. 7. L'extrémité la plus longue est arrondie. Cette conception permet d'accroître le diamètre des pales 200 et par conséquent la puissance théorique du capteur d'énergie de l'éolienne, en utilisant des membrures de même longueur et sans réduire leur rigidité. On remarquera que chaque membrure 210 n'est pas fixée exactement en son milieu autour du moyeu 300, compte tenu de la longueur différente des brins situés de part et d'autre de la bride 400.

Sur la Fig. 4b, on remarque la présence de deux échancrures 216 réalisées sur les deux bords latéraux de la membrure 210, au niveau de sa partie centrale et qui, lorsque les pales sont agencées autour du moyeu, permettent de décaler latéralement deux membrures au niveau de leur croisement afin de les obliger à se déformer dans une géométrie voulue. On peut ainsi définir le pas moyen de chaque pale. Une éolienne 100 comprenant de telles membrures 210 échancrées et assemblées, est montrée sur la Fig. 7.

Sur la Fig. 4c, la membrure 210 est constituée de deux branches parallèles décalées latéralement en étant réunies par une branche intermédiaire. Cette structure permet également de décaler latéralement deux membrures au niveau de leur croisement afin de les obliger à se déformer dans une géométrie voulue. On peut définir, là encore, le pas moyen de chaque pale.

Sur la Fig. 4d, la largeur de la membrure 210 augmente avec l'éloignement de ses extrémités et s'amenuise à l'approche de sa partie centrale pour renforcer sa structure et accroître sa surface exposée au vent.

On peut encore utiliser pour fabriquer une membrure, en remplacement d'une matière souple, une préforme thermoplastique qui est conformée à chaud sur un gabarit pour élaborer une membrure à la géométrie cambrée quasi définitive. Cette membrure pourra cependant être légèrement déformée pour la précontraindre au montage.

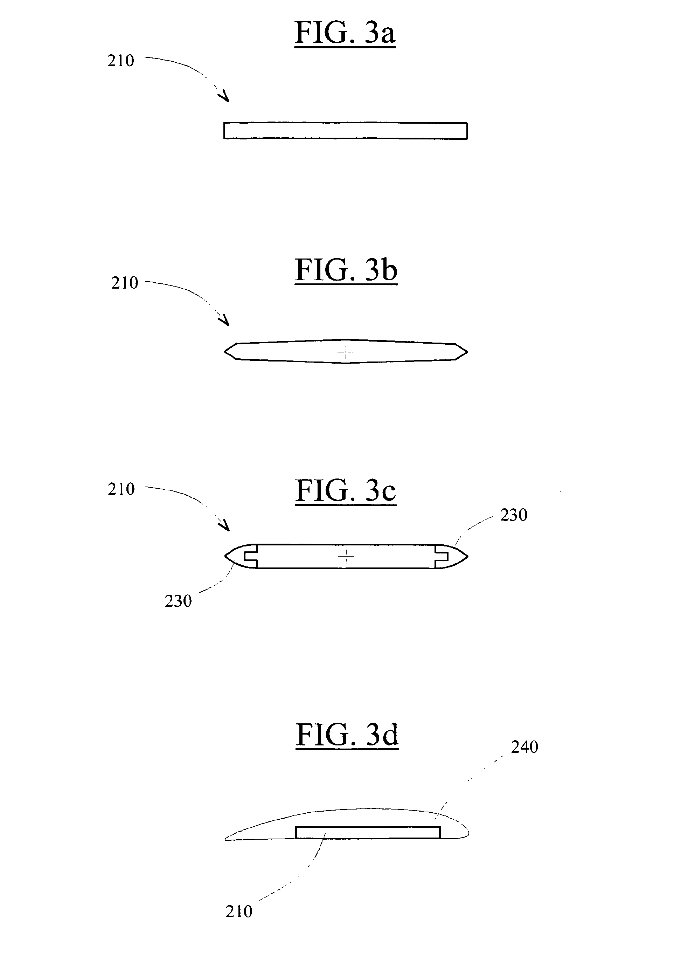

Sur la Fig. 3a, la membrure 210 présente une section rectangulaire peu coûteuse à fabriquer puisque la membrure peut être découpée dans une feuille de matériau. Elle peut encore prendre la forme d'un profilé fabriqué par une opération d'extrusion d'une matière.

Sur la Fig. 3b, le profilé 210 présente une section amincie sur ses deux bords latéraux pour limiter la traînée en fonctionnement. Il peut être fabriqué par une opération d'extrusion d'une matière.

Sur la Fig. 3c, les deux bords latéraux du profilé sont respectivement recouverts par deux rebords 230 arrondis ou profilés, pour limiter la traînée en fonctionnement. Dans une variante de réalisation non représentée, seul le bord latéral d'attaque est recouvert par un rebord profilé.

Sur la Fig. 3d, une coiffe 240 recouvre sur sa longueur utile le profilé sur une face principale et sur ses deux bords latéraux pour lui conférer une section en profil d'aile d'avion apte à améliorer son rendement. La matière utilisée pour la fabrication de cette coiffe est avantageusement un polymère tel que du polyéthylène, du polycarbonate, du PVC ® extrudé, ou encore un alliage d'aluminium. Le profilé de section rectangulaire servant d'âme à la membrure est du même type que celui présenté sur la Fig. 3a.

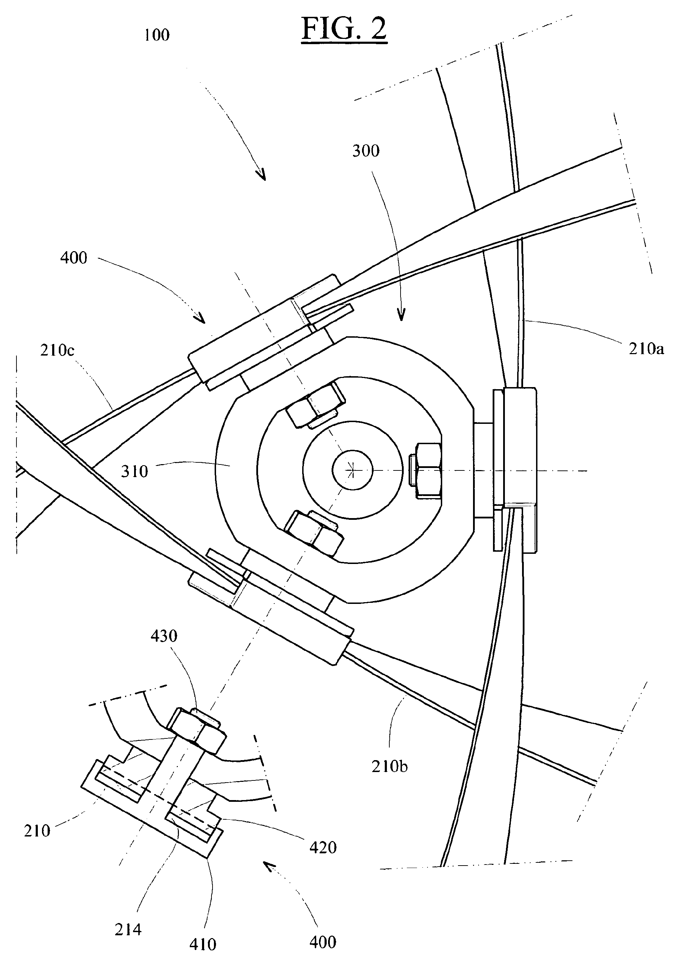

La construction de l'éolienne se présente de la manière suivante. Sur la Fig. 2, chaque membrure 210 est fixée au niveau de son milieu autour du moyeu 300. On utilise avantageusement pour réaliser cette liaison, une bride 400 qui est interposée entre une membrure et le moyeu. Celui-ci est pourvu d'une paroi cylindrique 310 tronquée à intervalles réguliers de faces biseautées sur lesquelles prennent appui les brides.

Chaque bride 400 se compose d'une plaque de positionnement 410 présentant une section en U, d'une entretoise 420 apte à prendre place dans ladite plaque pour pincer une membrure 210 et d'un moyen de bridage 430 de l'ensemble sur le moyeu. Le moyen de bridage 430 est constitué ici d'un boulon prenant ancrage dans la plaque de positionnement 410 en traversant le trou 214 de la membrure, l'entretoise 420 placée en appui sur une face biseautée de la paroi circulaire 310, et ladite paroi cylindrique 310 du moyeu 300. En serrant le boulon 430, la membrure 210 est ainsi bridée entre la plaque de positionnement 410 et l'entretoise 420, en étant solidarisée au niveau de sa partie centrale, sur le moyeu 300. Cette bride 400 peut être orientée autour de l'axe de son boulon avant son serrage, si bien que l'on peut modifier la courbure, la torsion, de ladite membrure et par conséquent son pas moyen.

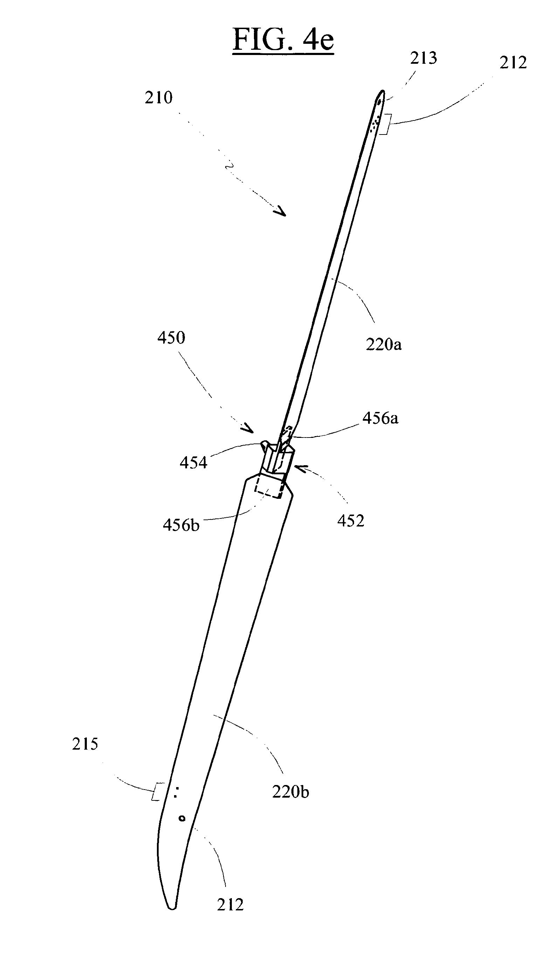

Sur la Fig. 4e, la membrure 210 est constituée de deux éléments 220a et 220b assemblés sur une bride de liaison 450 destinée à être solidarisée sur le moyeu de l'éolienne. L'assemblage des deux éléments sur la bride de liaison est réalisé de préférence par une opération de soudage, de rivetage ou de boulonnage. Cette conception de la membrure permet de construire des pales de relativement grand diamètre. Elle peut aussi être plus facilement transportée en étant démontée. S'agissant de grandes membrures, celles-ci sont avantageusement fabriquées en métal en étant préformées pour définir, en particulier leur pas de départ, afin de pallier le manque d'élasticité du métal utilisé.

La bride de liaison 450 se compose d'un pivot 452 comportant un axe 454 permettant l'assemblage de la bride sur la paroi cylindrique du moyeu, le pivot étant prolongé latéralement par deux ailes de réception 456 des deux éléments 220 de la membrure 210. Les deux ailes 456 sont décalées angulairement et de manière symétrique de part et d'autre de l'axe 454 du pivot 452 pour définir le pas de départ des deux éléments de la membrure. La bride de liaison 450 est solidarisée au moyeu de la même manière que la bride 400 décrite ci-avant.

Ensuite, et en référence à la Fig. 5, lorsque les membrures 210 sont solidarisées autour du moyeu 300, on procède à la jonction de leurs extrémités deux à deux. On rapproche alors, en les pliant et en les vrillant, deux extrémités de deux membrures distinctes, puis on les réunit, au niveau des extrémités repliées en fixant dans les trous 212 positionnés en vis-à-vis, un moyen d'assemblage tel qu'un rivet, un boulon. S'agissant de membrures métalliques, il peut s'avérer intéressant de les pré-cambrer avant de procéder à leur fixation.

On procède ainsi pour toutes les extrémités libres des membrures et on obtient une structure d'éolienne comme celle qui apparaît sur les Figs 1, 6 et 7.

On remarquera sur les détails en vignette de la Fig. 4a, ainsi que sur la Fig. 7, la présence d'orifices 213 réalisés au niveau d'une extrémité de la membrure à proximité des trous 212 et d'autres orifices 215 réalisés au niveau de l'autre extrémité de ladite membrure, également à proximité des trous 212. Lorsque deux membrures 210 sont assemblées par un moyen d'assemblage traversant les trous 212 disposés en vis-à-vis, on peut encore modifier, avant le bridage du moyen de fixation, l'angle formé entre les deux membrures pour modifier le pas moyen de la pale. En introduisant un moyen de blocage, tel qu'un boulon, entre des orifices 213 et 215 disposés en vis-à-vis, on positionne angulairement avec précision, lesdites membrures.

L'éolienne de l'invention est d'une construction simple à mettre en oeuvre. Son coût de fabrication est relativement réduit.

La structure souple de ses pales lui confère un fonctionnement silencieux comparé aux éoliennes à pales rigides. La structure des membrures ceinturant le moyeu, le fait que chaque pale tienne la suivante, procure une construction à la fois rigide et légère au capteur d'énergie de l'éolienne. Celle-ci est ainsi capable de supporter de fortes rafales de vent, c'est-à-dire des vitesses de vent de l'ordre de 90-100 km/h.

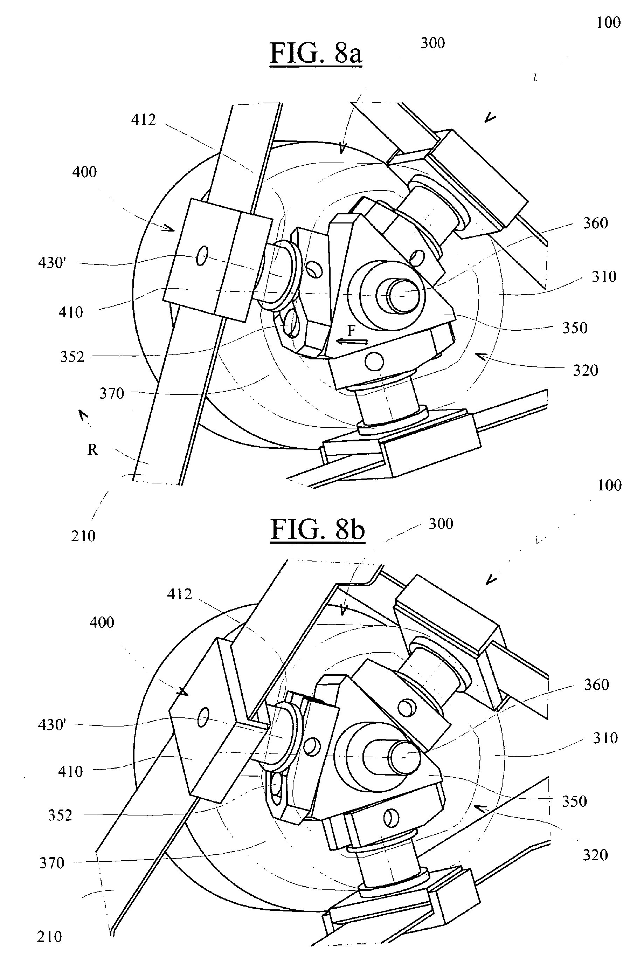

Une version de l'éolienne, dont le pas est réglable par l'intermédiaire d'un mécanisme à commande unique, est présentée sur les Figs. 8. Cette construction convient pour des éoliennes susceptibles de fournir une relativement grande puissance.

Le mécanisme comprend un entraîneur 350 constitué d'une plaque de section polygonale qui est logé dans la paroi cylindrique 310 du moyeu 300. Il est traversé par un taraudage dans lequel est vissée une vis 360 tenue axialement dans le moyeu 300 et qui est montée libre à rotation procurant à l'entraîneur 350 la faculté de coulisser suivant la direction de l'axe du moyeu lorsque l'on visse ou dévisse ladite vis.

Un doigt 352 est ancré sur chacune des faces latérales de l'entraîneur 350 et autour duquel peut coulisser une glissière 370 constituée ici d'une pièce de section en U, et dans laquelle est fixée l'extrémité libre d'un axe 430' tenu dans la plaque de positionnement 410 d'une bride correspondante 400. Cet axe 430' est monté libre à rotation dans un palier 412 qui traverse la paroi cylindrique 310.

Ainsi, en entraînant à rotation la vis 360, on déplace l'entraîneur 350 suivant la direction de la flèche F, ce qui entraîne à rotation la glissière 370, les brides associées 400, et par conséquent modifie la position angulaire de la membrure 210 correspondante l'obligeant à se vriller dans sa partie centrale ce qui modifie son pas moyen. Le changement d'orientation d'une membrure est indiqué par la flèche R.

Un entraînement motorisé peut être accouplé à la vis 360 pour pouvoir commander le réglage des pales pendant le fonctionnement de l'éolienne. Il est avantageusement constitué d'un motoréducteur placé dans la coiffe de recouvrement du moyeu.

Ce motoréducteur peut être commandé manuellement ou être avantageusement piloté par un calculateur raccordé à un anémomètre pour qu'il puisse optimiser les performances de l'éolienne (démarrage, régulation de sa vitesse optimum) ou garantir sa sécurité de fonctionnement (ouverture des membrures à leur pas maximum).

On peut de la sorte réduire le pas moyen des pales pour réduire leur vitesse de rotation par grands vents (à partir de la valeur 8 de l'échelle de Beaufort), en particulier, en provoquant progressivement un décrochage aérodynamique du profil des pales. On peut alors éviter l'utilisation d'un mécanisme de freinage.

L'éolienne peut être pourvue en variante de réalisation non représentée, d'un frein régulateur destiné à limiter la vitesse de rotation des pales par grands vents. Il peut être du type centrifuge incluant un régulateur de Watt.

L'éolienne peut encore être pourvue dans une autre variante de réalisation non représentée, d'un frein de sécurité prévu pour stopper la rotation des pales, lorsqu'il s'avère nécessaire d'interrompre le fonctionnement de l'éolienne, par exemple par grands vents, pour procéder à sa maintenance. Le frein est dans un mode de réalisation avantageux du type frein à disque. Il peut encore prendre la forme d'un freinage électrodynamique mettant en oeuvre des courants de Foucault, des résistances électriques qui sont commutées à la place du générateur.

## Revendications

1. Eolienne (100) comprenant des pales (200) solidaires d'un moyeu (300) de transmission de couple, **caractérisée en ce que** chaque pale (200) est constituée d'une première membrure (210a), d'une seconde membrure (210b) solidaires autour du moyeu (300), au niveau de leur milieu, et en étant réunies au niveau d'une extrémité pour former ladite pale (200), l'autre extrémité de chaque membrure (210) formant une moitié d'une autre pale (200).

2. Eolienne (100) selon la revendication 1, **caractérisée en ce que** chaque membrure (210) présente une section rectangulaire.

3. Eolienne (100) selon la revendication 1 ou 2, **caractérisée en ce que** chaque membrure est constituée d'au moins un profilé (210).

4. Eolienne (100) selon la revendication 1, 2 ou 3, **caractérisée en ce qu'**au moins l'un des deux bords latéraux de la membrure (210) est recouvert par un rebord (230), profilé, pour limiter la traînée en fonctionnement.

5. Eolienne (100) selon l'une quelconque des revendications précédentes, **caractérisée en ce qu'**une coiffe (240) recouvre sur sa longueur utile la membrure (210) sur une face principale et sur ses deux bords latéraux pour lui conférer une section en profil d'aile d'avion apte à améliorer son rendement.

6. Eolienne (100) selon l'une quelconque des revendications 1 à 5, **caractérisée en ce que** chaque membrure (210) est fixée au niveau de son milieu sur le moyeu (300) par l'intermédiaire d'une bride (400, 450).

7. Eolienne (100) selon la revendication 6, **caractérisée en ce que** chaque bride (400) comprend une plaque de positionnement (410) présentant une section en U, une entretoise (420) apte à prendre place dans ladite plaque pour pincer une membrure (210), un moyen de bridage (430) pouvant serrer ladite membrure entre ces deux composants et les brider sur le moyeu (300).

8. Eolienne (100) selon l'une quelconque des revendications 1 à 6, **caractérisée en ce que** chaque membrure (210) est constituée de deux éléments (220) assemblés sur une bride (450) solidarisée sur le moyeu (300).

9. Eolienne (100) selon la revendication 8, **caractérisée en ce que** chaque bride (450) se compose d'un pivot (452) comportant un axe (454) permettant l'assemblage de ladite bride sur le moyeu (300), le pivot étant prolongé latéralement par deux ailes de réception (456) des deux éléments (220), les deux ailes (456) étant décalées angulairement et de manière symétrique de part et d'autre de l'axe (454) du pivot (452) pour définir le pas de départ des deux éléments de la membrure.

10. Eolienne (100) selon l'une quelconque des revendications précédentes, **caractérisée en ce que** la première membrure (210a) et la seconde membrure (210b) sont réunies par l'intermédiaire d'un moyen d'assemblage traversant des trous (212) prévus dans lesdites membrures pour former l'extrémité de ladite pale (200),

11. Eolienne (100) selon la revendication 10, **caractérisée en ce que** des orifices (213, 215) traversent la première membrure (210a) et la seconde membrure (210b) à proximité des trous (212) pour recevoir un moyen de blocage pour positionner angulairement les deux membrures (210) afin de régler le pas moyen de la pale (200) correspondante.

12. Eolienne (100) selon l'une quelconque des revendications précédentes, **caractérisée en ce qu'**au moins une échancrure (216) est réalisée sur le bord latéral de chaque membrure (210) au niveau de sa partie centrale permettant de décaler latéralement deux membrures au niveau de leur croisement afin de les obliger à se déformer dans une géométrie voulue.

13. Eolienne (100) selon l'une quelconque des revendications précédentes, **caractérisée en ce que** chaque membrure (210) est constituée de deux branches parallèles décalées latéralement en étant réunies par une branche intermédiaire, permettant de décaler latéralement deux membrures au niveau de leur croisement afin de les obliger à se déformer dans une géométrie voulue.

14. Eolienne (100) selon l'une quelconque des revendications précédentes, **caractérisée en ce que** la largeur de la membrure (210) augmente avec l'éloignement de ses extrémités pour renforcer sa structure et accroître sa surface exposée au vent.

15. Eolienne (100) selon l'une quelconque des revendications précédentes, **caractérisée en ce qu'**elle incorpore un mécanisme de réglage (320) du pas moyen des pales (200).

16. Eolienne (100) selon la revendication 15, **caractérisée en ce que** le mécanisme de réglage (320) comprend un entraîneur (350) mobile suivant la direction axiale du moyeu (300), un doigt (352) ancré sur chacune des faces latérales de l'entraîneur (350) et autour duquel peut osciller une glissière (370) et dans laquelle est fixée l'extrémité libre d'un axe (430') tenu dans la plaque de positionnement (410) d'une bride correspondante (400, 450) pour la décaler angulairement.

17. Eolienne (100) selon la revendication 16, **caractérisée en ce que** l'entraîneur (350) est logé dans une paroi cylindrique (310) constitutive du moyeu (300), l'entraîneur (350) étant traversé par un taraudage dans lequel est vissée une vis (360) tenue axialement dans le moyeu (300) et qui est montée libre à rotation, procurant à l'entraîneur (350) la faculté de coulisser suivant la direction de l'axe du moyeu (300), lorsque l'on visse ou dévisse ladite vis.

18. Eolienne (100) selon la revendication 17, **caractérisée en ce qu'**un entraînement motorisé est accouplé à la vis (360) pour pouvoir commander le réglage des pales pendant le fonctionnement de l'éolienne.

19. Procédé de construction d'une éolienne (100) selon l'une quelconque des revendications précédentes, **caractérisé en ce qu'**il consiste à utiliser des membrures (210) souples ou pré-cambrées, à les solidariser au niveau de leur milieu autour du moyeu (300), à réunir deux par deux leurs extrémités libres de manière à fabriquer les pales (200).

## Patentansprüche

1. Windkraftanlage (100), die fest mit einer Drehmomentübertragungsnabe (300) verbundene Blätter (200) enthält, **dadurch gekennzeichnet, dass** jedes Blatt (200) aus einem ersten Gurt (210a) und einem zweiten Gurt (210b) besteht, die um die Nabe (300) im Bereich ihrer Mitte fest verbunden und im Bereich eines Endes vereint sind, um das Blatt (200) zu formen, wobei das andere Ende jedes Gurts (210) eine Hälfte eines anderen Blatts (200) formt.

2. Windkraftanlage (100) nach Anspruch 1, **dadurch gekennzeichnet, dass** jeder Gurt (210) einen rechteckigen Querschnitt hat.

3. Windkraftanlage (100) nach Anspruch 1 oder 2, **dadurch gekennzeichnet, dass** jeder Gurt aus mindestens einem Profilteil (210) besteht.

4. Windkraftanlage (100) nach Anspruch 1, 2 oder 3, **dadurch gekennzeichnet, dass** mindestens einer der zwei Seitenränder des Gurts (210) von einer profilierten Randleiste (230) bedeckt ist, um im Betrieb den Luftwiderstand zu begrenzen.

5. Windkraftanlage (100) nach einem der vorhergehenden Ansprüche, **dadurch gekennzeichnet, dass** eine Abdeckung (240) den Gurt (21) auf einer Hauptseite und auf seinen zwei Seitenrändern über seine Betriebslänge bedeckt, um ihm einen Flugzeugflügelprofilquerschnitt zu verleihen, der seine Leistung verbessern kann.

6. Windkraftanlage (100) nach einem der Ansprüche 1 bis 5, **dadurch gekennzeichnet, dass** jeder Gurt (210) im Bereich seiner Mitte mittels eines Flanschs (400, 450) an der Nabe (300) befestigt ist.

7. Windkraftanlage (100) nach Anspruch 6, **dadurch gekennzeichnet, dass** jeder Flansch (400) eine Positionierplatte (410) mit einem U-förmigen Querschnitt, einen Abstandshalter (420), der in die Platte eingesetzt werden kann, um einen Gurt (210) einzuklemmen, eine Flanscheinrichtung (430) enthält, die den Gurt zwischen diesen zwei Bauteilen einklemmen und sie an die Nabe (300) anflanschen kann.

8. Windkraftanlage (100) nach einem der Ansprüche 1 bis 6, **dadurch gekennzeichnet, dass** jeder Gurt (210) aus zwei auf einem fest mit der Nabe (300) verbundenen Flansch (450) montierten Elementen (220) besteht.

9. Windkraftanlage (100) nach Anspruch 8, **dadurch gekennzeichnet, dass** jeder Flansch (450) aus einem Drehzapfen (452) besteht, der eine Achse (454) aufweist, die die Montage des Flanschs auf der Nabe (300) erlaubt, wobei der Drehzapfen seitlich durch zwei Aufnahmeflügel (456) der zwei Elemente (220) verlängert wird, wobei die zwei Flügel (456) winkelmäßig und symmetrisch zu beiden Seiten der Achse (454) des Drehzapfens (452) versetzt sind, um die Ausgangsverstellung der zwei Elemente des Gurts zu definieren.

10. Windkraftanlage (100) nach einem der vorhergehenden Ansprüche, **dadurch gekennzeichnet, dass** der erste Gurt (210a) und der zweite Gurt (210b) mit Hilfe einer in den Gurten vorgesehene Löcher (212) durchquerenden Montageeinrichtung vereint werden, um das Ende des Blatts (200) zu formen.

11. Windkraftanlage (100) nach Anspruch 10, **dadurch gekennzeichnet, dass** Öffnungen (213, 215) den ersten Gurt (210a) und den zweiten Gurt (210b) in der Nähe der Löcher (212) durchqueren, um eine Blockiereinrichtung aufzunehmen, um die zwei Gurte (210) winkelmäßig zu positionieren, um die mittlere Verstellung des entsprechenden Blatts (200) zu regeln.

12. Windkraftanlage (100) nach einem der vorhergehenden Ansprüche, **dadurch gekennzeichnet, dass** mindestens eine Auskehlung (216) auf dem Seitenrand jedes Gurts (210) im Bereich seines zentralen Teils vorgesehen ist, die es ermöglicht, zwei Gurte seitlich im Bereich ihrer Kreuzung zu versetzen, um sie zu zwingen, sich in einer gewünschten Geometrie zu verformen.

13. Windkraftanlage (100) nach einem der vorhergehenden Ansprüche, **dadurch gekennzeichnet, dass** jeder Gurt (210) aus zwei parallelen Zweigen besteht, die seitlich versetzt sind, indem sie durch einen Zwischenzweig vereint sind, was es ermöglicht, zwei Gurte seitlich im Bereich ihrer Kreuzung zu versetzen, um sie zu zwingen, sich in einer gewünschten Geometrie zu verformen.

14. Windkraftanlage (100) nach einem der vorhergehenden Ansprüche, **dadurch gekennzeichnet, dass** die Breite des Gurts (210) mit der Entfernung von seinen Enden zunimmt, um seine Struktur zu verstärken und seine dem Wind ausgesetzte Fläche zu vergrößern.

15. Windkraftanlage (100) nach einem der vorhergehenden Ansprüche, **dadurch gekennzeichnet, dass** sie einen Einstellmechanismus (320) der mittleren Steigung der Blätter (200) enthält.

16. Windkraftanlage (100) nach Anspruch 15, **dadurch gekennzeichnet, dass** der Einstellmechanismus (320) einen gemäß der axialen Richtung der Nabe (300) beweglichen Mitnehmer (350) und einen auf jeder der Seitenflächen des Mitnehmers (350) verankerten Finger (352) enthält, um den eine Gleitschiene (370) schwingen kann, in der das freie Ende einer Achse (430') befestigt ist, die in der Positionierplatte (410) eines entsprechenden Flanschs (400, 450) gehalten wird, um sie winkelmäßig zu versetzen.

17. Windkraftanlage (100) nach Anspruch 16, **dadurch gekennzeichnet, dass** der Mitnehmer (350) in einer zylindrischen Wand (310) untergebracht ist, die Teil der Nabe (300) ist, wobei der Mitnehmer (350) von einem Innengewinde durchquert wird, in das eine Schraube (360) geschraubt ist, die axial in der Nabe (300) gehalten wird und frei drehend montiert ist, was dem Mitnehmer (350) die Fähigkeit verleiht, in Richtung der Achse der Nabe (300) zu gleiten, wenn die Schraube fest- oder losgeschraubt wird.

18. Windkraftanlage (100) nach Anspruch 17, **dadurch gekennzeichnet, dass** ein motorisierter Antrieb mit der Schraube (360) gekoppelt ist, um die Einstellung der Blätter während des Betriebs der Windkraftanlage steuern zu können.

19. Verfahren zum Bau einer Windkraftanlage (100) nach einem der vorhergehenden Ansprüche, **dadurch gekennzeichnet, dass** es darin besteht, elastische oder vorgebogene Gurte (210) zu verwenden, sie im Bereich ihrer Mitte um die Nabe (300) fest zu verbinden, ihre freien Enden paarweise zu vereinen, um die Blätter (200) herzustellen.

## Claims

1. Wind turbine (100), comprising blades (200) formed as one piece with a hub (300) for torque transmission, **characterised in that** each blade (200) is comprised of a first member (210a) and a second member (210b) formed as one piece around the hub (300) in the region of their middle section, and being brought together in the region of one end in order to form said blade (200), the other end of each member (210) forming a part of another blade (200).

2. Wind turbine (100) according to claim 1, **characterised in that** each member (210) exhibits a rectangular cross-section.

3. Wind turbine (100) according to claim 1 or 2, **characterised in that** each member is constituted by at least one profiled element (210).

4. Wind turbine (100) according to claim 1, 2, or 3, **characterised in that** at least one of the two lateral edges of the member (210) is covered by a profiled edge element (230) in order to limit the drag when in operation.

5. Wind turbine (100) according to any of the preceding claims, **characterised in that** a fairing (240) covers the member (210) over its useful length on one main face and on its two lateral edges, in order to provide it with a cross-section in profile of the shape of an aircraft wing, in such a way as to improve its performance.

6. Wind turbine (100) according to any of claims 1 to 5, **characterised in that** each member (210) is fixed in the region of its centre onto the hub (300) by means of a flange (400, 450).

7. Wind turbine (100) according to claim 6, **characterised in that** each flange (400) comprises a positioning pane (410) exhibiting a U-shaped cross-section, a cross-member (420) suitable for being located in said plate in order to clamp a member (210), and clamping means (450) capable of locking said member between these two components and clamping them on the hub (300).

8. Wind turbine (100) according to any of claims 1 to 6, **characterised in that** each member (210) is constituted by two elements (220) assembled on a flange (450) formed as one piece on the hub (300).

9. Wind turbine (100) according to claim 8, **characterised in that** each flange (450) is composed of a pivot (452) comprising an axis (454) allowing for the assemblage of said flange on the hub (300), the pivot being extended laterally by two accommodation wings (456) of two elements (220), the two wings (456) being offset at an angle and symmetrically on each side of the axis (454) of the pivot (452) in order to define the departure pitch of the two elements of the membrane.

10. Wind turbine (100) according to any one of the preceding claims, **characterised in that** the first member (210a) and the second member (210b) are connected by way of assembly means passing through holes (212) provided in said members in order to form the end of said blade (200).

11. Wind turbine (100) according to claim 10, **characterised in that** orifices (213, 215) traverse the first member (210a) and the second member (210b) in proximity to the holes (212) in order to accommodate blocking means such as to position the two members (210) at an angle in order to regulate the mean pitch of the corresponding blade (200).

12. Wind turbine (100) according to any one of the preceding claims, **characterised in that** at least one cutout aperture (216) is provided on the lateral edge of each member (210) in the region of its central part, such as to allow for the lateral offsetting of two members in the region of their crossing point in order to force them to become deformed into a desired geometrical arrangement.

13. Wind turbine (100) according to any one of the preceding claims, **characterised in that** each member (210) is constituted by two parallel branch elements, offset laterally and being connected by an intermediary branch element, so allowing for the lateral offsetting of two members in the region of their crossing point in order to force them to become deformed into a desired geometrical arrangement.

14. Wind turbine (100) according to any one of the preceding claims, **characterised in that** the width of the member (210) increases with the distance from its ends, in order to reinforce its structure and increase its surface exposed to the wind.

15. Wind turbine (100) according to any one of the preceding claims, **characterised in that** it incorporates a mechanism (320) for regulating the mean pitch of the blades (200).

16. Wind turbine (100) according to claim 15, **characterised in that** the regulating mechanism (320) comprises a drive element (350) capable of moving such as to follow the axial direction of the hub (300), a finger element (352) anchored on each of the lateral faces of the drive element (350) and around which a slide element (370) can move and in which is fixed the free end of an axle (430') held in the positioning plate (410) of a corresponding flange (400, 450) in order to offset it at an angle.

17. Wind turbine (100) according to claim 16, **characterised in that** the drive element (350) is accommodated in a cylindrical wall (310) forming part of the hub (300), being traversed by a thread, screwed into which is a bolt (360), held axially in the hub (300) and which is mounted such as to rotate freely, so allowing the drive element (350) the facility to slide, following the direction of the axis of the hub (300) when said bolt is screwed or unscrewed.

18. Wind turbine (100) according to claim 17, **characterised in that** a motorized drive element is connected to the bolt (360) in order to be able to control the regulating and setting of the blades when the wind turbine is in operation.

19. Method of construction of a wind turbine (100) according to any one of the preceding claims, **characterised in that** it consists of the use of flexible or pre-cambered members (210), forming them of one piece in the region of their centre around the hub (300), and bringing their free ends together two by two in such a way as to form the blades (200).
